# EUROPEAN PATENT SPECIFICATION

(11) **EP 1 608 714 B1**
(45) Date of publication and mention of the grant of the patent: **24.11.2010**
(21) Application number: 04721484.6
(22) Date of filing: 18.03.2004
(51) Int. Cl.: C09D 167/00, C08G 63/181

(54) **THERMOSETTING POWDER COMPOSITIONS FOR COATINGS**
HEISSHÄRTBARE PULVERZUSAMMENSETZUNGEN FÜR BESCHICHTUNGEN
COMPOSITIONS DE POUDRES THERMODURCISSABLES POUR REVETEMENTS

(30) Priority: 20.03.2003 EP 03006357
(43) Date of publication of application: 28.12.2005
(73) Proprietor: CYTEC SURFACE SPECIALTIES, S.A., 1070 Bruxelles (BE)
(72) Inventor: MOENS, Luc, B-1640 Sint-Genesius-Rode (BE); BUYSENS, Kris, B-9700 Oudenaarde (BE); MAETENS, Daniel, B-1082 Bruxelles (BE)
(74) Representative: Destryker, Elise Martine
(86) International application number: PCT/EP2004/002799
(87) International publication number: WO 2004/083325

(56) References cited:
- WO-A-02/50201
- US-A- 4 140 729
- US-A- 5 637 654
- US-A- 5 880 223
- US-B1- 6 284 845

## Description

The present invention relates to an isophthalic acid rich carboxyl functionalised polyester, containing linear chain aliphatic diols, and to thermosetting powder compositions comprising a mixture of the polyester with a β-hydroxyalkylamide group containing cross-linking agent.

The invention also relates to the use of said compositions for the preparation of powdered paints and varnishes for the making of coatings and to coatings obtained therewith.

Thermosetting powder compositions are well known in the art and are widely used as paints and varnishes for coating the most various articles. The advantages of these powder coatings are numerous; on the one hand, the problems associated with solvents are completely eliminated, and on the other hand, the powders are used without any loss since only the powder in direct contact with the substrate is retained on the article, the excess powder being, in principle, entirely recoverable and reusable. For these and other reasons, the powder coating compositions are preferred to coating compositions in the form of solutions in organic solvents.

Thermosetting powder compositions have already been widely used in the coating of domestic electrical appliances, automobile industry accessories, and the like. They generally contain a thermosetting organic binder, fillers, pigments, catalysts and various additives used to adapt their properties to their intended use.

There are various types of thermosetting powder compositions. The best known compositions contain either a mixture of carboxyl group-containing polymers, such as a carboxyl group-containing polyester or polyacrylate, and epoxy compounds, such as triglycidyl isocyanurate, glycidyl group-containing acrylic copolymers or β-hydroxyalkylamides or a mixture of hydroxyl group-containing polymers, most often a hydroxyl group-containing polyester, with blocked or non-blocked isocyanates, melamine resins, and the like.

The carboxyl group-containing or the hydroxyl group-containing polyesters suitable for use in the preparation of powdered varnishes and paints have already been described in numerous publications such as articles and patents.

These polyesters are usually prepared from aromatic dicarboxylic acids, mainly terephthalic acid and isophthalic acid and optionally a minor proportion of aliphatic or cycloaliphatic dicarboxylic acids, and from various polyols such as ethylene glycol, neopentyl glycol, 1,6-hexanediol, trimethylolpropane, and the like.

These polyesters based on aromatic dicarboxylic acids, when they are used with an appropriate cross-linking agent, provide thermosetting compositions giving paint and varnish coatings possessing good properties, both as regards their appearance and as regards their mechanical properties such as impact resistance, flexibility, etc.

Some of these polyesters and the powders derived from them often are used because of their remarkable weatherability characteristics. These polyesters mostly are derived from isophthalic acid, being the most important acid constituent among others and are commonly used with triglycidyl isocyanurate (TGIC) as the cross-linking agent. Yet, the coatings obtained from these powders, though proving outstanding weatherability, do not have any flexibility at all.

Moreover, TGIC presents problems of health and security. Indeed, TGIC is relatively toxic (Rat Oral LD50 of 0,4 g/kg) and is mutagenic according to the Ames Mutagenicity Test.

As a non toxic alternative to TGIC, β-hydroxyalkylamides β-(HAA) have been used for the cross-linking of powders containing carboxyl-bearing polyesters. But the use of β-(HAA) brings about new problems due to its high reactivity and to the fact that water is liberated during it's reaction with carboxyl groups.

Powder paints comprising as a binder a carboxylic acid group containing polyester and a β-(HAA) group containing cross-linking agent, produce water upon curing, thus creating bubbles in the coating especially when relatively thick layers are applied. Gas bubbles remaining in the coating reduce the adherence and the protective effect of the coating. In order to reduce or even avoid these gas bubbles remaining in the coating, two solutions, being either reducing the melt viscosity of the powder, or slackening the reactivity of the binder system can be envisaged. Yet, incorporation of considerable amounts of plasticising constituents in the binder system often reduces outdoor durability of the cured paint. Besides, from literature it is known that the esterification reaction of a resin acid group with a hydroxyl group of the β-(HAA) group containing hardener neither can be accelerated nor can be slowed down, except from respectively increasing or decreasing the resin acid number along with the stoichiometric amount of the β-(HAA) group containing compound.

Some solutions have been sought for resolving these problems appearing with the use of β-(HAA), and at the same time, for resolving the problems of lack of flexibility of coatings made from powders containing isophthalic-rich polyesters.

EP 649890 claims powder coating compositions comprising a β-(HAA) cross-linking agent and an acid functional polyester having an acid number ranging from 15 through 70 mg KOH/g which is substantially based on dicarboxylic acid units containing 80 to 100% mole of isophthalic acid, on glycols containing at least 50% mole of branched aliphatic glycols with at least 4 carbon atoms, at most 50% mole of a linear aliphatic diol with less than 4 carbon atoms and/or cycloaliphatic diols, 0 to 10% mole of a linear aliphatic diol with at least 4 carbon atoms and on monomers having a functionality of at least three, in an amount of up to 8% mole based on the total amount of dicarboxylic acids and glycols.

As appears from the examples, only a very few powders of this invention gives a good flow on melting, which results in coatings having a poor surface appearance.

A yet sophisticated way to flexibilise thermosetting powder coating compositions derived from carboxyl functional isophthalic acid rich amorphous polyesters is the use of semi-crystalline acid functional polyesters as co-reactable part of the carboxylic acid amorphous resin in a binder along with a polyepoxy compound or a β-(HAA), such as claimed in e.g. WO 91/14745. A careful selection of the proper combination of amorphous and semi-crystalline resins, respectively, enables for flexible and weatherable powder coating compositions derived from carboxyl functional isophthalic acid rich polyesters, as far as particular process conditions for mixing, extrusion and grinding are exercised and appropriate storage conditions of the powder thus obtained, are considered. Anyway, the solution presented in this invention to mix a semi-crystalline acid functional polyesters with a carboxyl functional amorphous polyester represents a technical complication.

In patent application EP 668.895, thermosetting powders are described which comprise a carboxyl group-containing polyester and a β-(HAA). The polyester may comprise isophthalic or terephthalic acid and has a functionality less than 2, obtained by the addition in the polyester of monofunctional acids or alcohols. Due to the low functionality of the polyester, its reactivity is reduced, which brings about a better flow during the melting of the powder on the substrate. Nevertheless, as the polyester has some non-reactive end groups, which do not participate in the cross-linking reaction during the formation of the coating, the latter has a reduced solvent resistance and a reduced flexibility.

In conclusion it can be seen that the various powdered compositions which have been proposed today for outdoor application where an outstanding weatherability along with flexibility is required, and which do not make use of toxic cross-linking agents, all are characterised by one or more drawbacks or limitations. There is thus still a need for powdered thermosetting compositions capable of producing coatings proving an outstanding weatherability and a good flexibility and not exhibiting the shortcomings of prior art.

It now has been surprisingly found that, upon application and curing, the powder coating compositions, comprising the binder of the present invention, - based on a carboxylic acid group containing amorphous isophthalic acid/linear chain aliphatic diol rich polyester in combination with a β-hydroxyalkylamide group containing cross-linking agent - give paint films proving outstanding degassing properties at a film thickness of up to about 200 µm for a curing time of from 15 seconds to 50 minutes at curing temperatures from 140 to 250°C. Moreover, the powdered thermosetting compositions of the invention produce coatings proving very smooth coatings, exhibiting good outdoor durability and flexibility, without any defects possibly originated from volatile compounds.

Thus, the present invention relates to powdered thermosetting compositions, **characterised in that** they comprise:
(a) a carboxylic acid group containing amorphous polyester having an acid number of from 12 to 34 mg KOH/g and prepared from a polyacid constituent comprising from 81 to 100% mole of isophthalic acid and from 0 to 19% mole of another aliphatic, cycloaliphatic or aromatic polyacid, and of a polyol constituent comprising from 15 to 65% mole of one or more linear chain aliphatic C4 - C16 diol, from 35 to 85% mole of neopentyl glycol, from 0 to 50% mole of another linear chain aliphatic and/or cycloaliphatic diol and from 0 to 5% mole of a polyol with 3 or more hydroxyl groups;
b) a cross-linking agent having at least two β-hydroxyalkylamide groups, with the proviso that the composition contains less than 5% by weight of semi-crystalline polyesters.

The carboxyl functional amorphous polyester of the present invention is preferably further characterised by:
- a number averaged molecular weight ranging from 2500 to 8600, more preferably from 3300 to 7500 as measured by gel permeation chromatography (GPC)
- a glass transition temperature Tg from 40 to 80°C and more preferably from 56 to 70°C as measured by differential scanning calorimetry (DSC) according to ASTM D3418 with a heating gradient of 20°C per minute
- an ICI (cone/plate) viscosity accordingly to ASTM D4287, measured at 200°C ranging from 5 to 15000 mPa.s

The acid constituent of the amorphous polyester according to the present invention, is for 81 to 100% mole composed of isophthalic acid and for 0 to 19% mole of another polyacid constituent selected from one or more aliphatic, cycloaliphatic or aromatic polyacids, such as fumaric acid, maleic acid, phthalic acid, terephthalic acid. 1,4-cyclohexanedicarboxylic acid, 1,3-cyclohexanedicarboxylic acid, 1.2-cyclohexanedicarboxylic acid, succinic acid, adipic acid, glutaric acid, pimelic acid, suberic acid, azelaic acid, sebacic add, 1,12-dodecanedioic acid, trimellitic acid or pyromellitic acid, etc.. and the corresponding anhydrides.

The polyol constituent of the amorphous polyester according to the present invention, is for 15 to 65% mole composed of a linear chain aliphatic C4-C16 diol such as 1.4-butanediol, 1,5-pentanediol. 1,6-hexanediol, 1,7-heptanediol, 1,8-octanediol, 1,9-nonanediaol, 1,10-decanediol, 1,12-dodecanediol, 1,14-tetradecandiol, 1,16-hexadecandiol, used in a mixture or alone. The polyol constituent of this polyester also comprises 35 to 85% mole of neopentyl glycol and for 0 to 50% mole and preferably for 0 to 30% mole of another polyol constituent selected from one or more linear chain aliphatic or cycloaliphatic polyol such as ethylene glycol, propylene glycol, 1,4-cyclo-hexanediol, 1,4-cyclohexanedimethanol, hydrogenated Bisphenol A. The polyol constituent may also comprise 0 to 5% mole of a polyol having 3 or more hydroxyl groups such as trimethylolpropane, ditrimethylopropane, pentaerythrytol, etc. Preferably, neopentyl glycol hydroxypivalate is not used as polyol according to the present invention.

Preferably, the polyester according to the present invention is composed of polycarboxylic acid units containing from 81 to 100% mole of isophthalic acid, from 0 to 19% mole of terephthalic acid and/or 1,4-cyclohexanedicarboxylic acid, and of polyol constituents containing from 15 to 65% mole of linear chain aliphatic C4-C16 diol, preferably 1,6-hexmediol, from 35 to 85% mole of neopentyl glycol from 0 to 50% mole of ethylene glycol, and 0 to 5% mole of trimethylolpropane.

The carboxylic add group containing amorphous polyester, according to the present invention, is usually prepared using conventional esterification techniques well known in the art. The polyester is generally prepared according to a procedure consisting of one or more reaction steps.

The esterification conditions generally used to prepare the polyesters are conventional, namely a standard esterification catalyst, such as dibutyltin oxide, dibutyltin dilaurate, n-butyltin trioctoate, sulphuric acid or a sulphonic acid, tetraisopropyl titanate or tetra-n-butyl titanate can be used in an amount from 0.05 to 1.50% by weight of the reactants and optionally, colour stabilizers, for example, phenolic antioxidants such as Irganox 1010 (Ciba) or phosphonite- and phosphite-type stabilisers such as tributylphosphite, can be added in an amount from 0 to 1% by weight of the reactants.

Polyesterification is generally carried out at a temperature which is gradually increased from 130°C to about 190 to 250°C. first under normal pressure, then, when necessary, under reduced pressure at the end of each process step, while maintaining these operating conditions until a polyester is obtained, which has the desired hydroxyl and/or acid number. The degree of esterification is usually followed by determining the amount of water formed in the course of the reaction and the properties of the obtained polyester, for example the hydroxyl number, the acid number, the molecular weight or the viscosity.

In that case, the carboxyl group containing amorphous polyester, as described above, is part of a binder system along with the β-hydroxyalkylamide group containing cross-linking agent, in the preparation of powder coating compositions for use as paint or clear lacquer.

It has been found that polyesters containing at least 81 % mole of isophthalic acid and at least 15 % mole to 65 % mole of linear chains aliphatic C4-C16 diol, along with the other constituents of the polyester, give especially good coatings when crosslinked with β-(HAA).

Suitable β-hydroxyalkylarmide cross-linking agents are those which contain at least two bis(β-hydroxyalkyl)amide groups. Commercial products are available, such as N,N,N',N'-tetrakis-(2-hydroxyethyl)-adipamide, known under the tradename Primid XL-552 and N,N,N'N'-tetrakis-(2-hydroxypropyl)-adipamide, known under the tradename Primid. QM1260 for example. Other β-hydroxyalkylamide are described in the literature, for example those mentioned in the patents US-A-4727111, US-A 4788255. US-A-4076917. or in the patent applications EP-A-322834 and EP-A-473380.

The β-hydroxyalkylamide group containing cross-linking agent described herein above is generally used in an amount from, 0.25 to 1,40 preferably from 0.60 to 1.05 equivalent of carboxyl group present in the amorphous polyester per equivalent of β-hydroxyalkyl groups.

The amount of cross-linking agent in the powdered thermosetting compositions according to the present invention is generally from 1 to 10 % by weight relative to the weight of the carboxylic acid containing amorphous poryester.

The powdered thermosetting compositions for coatings according to the present invention contain less than 5 % by weight of semi-crystalline polyester. The powdered thermosetting compositions for coatings according to the present invention more preferably contain no semi-crystalline polyester.

In addition to the essential components described above, compositions within the scope of the present invention can also include flow control agents such as Resiflow PV5 (Worlee), Modaflow (Monsanto), Acronal 4F (BASF), etc., and degassing agents such as benzoin (BASF) etc. To the formulation UV-light absorbers such as Tinuvin 900 (Ciba), hindered amine light stabilises represented by Tinuvin 144 (Ciba), other stabilising agents such as Tinuvin 312 and 1130 (Ciba), antioxidants such as Irganox 1010 (Ciba) and stabilisers from the phosphonite or phosphite type can be added.

Both, pigmented systems as well as clear lacquers can be prepared.

A vanes of dyes and pigments can be utilised in the composition of this invention. Examples of useful pigments and dyes are: metallic oxides such as titaniumdioxide, ironoxide, zincoxide and the like, metal hydroxides, metal powders, sulphides, sulphates, carbonates, silicates such as ammoniumsilicate, carbon black. talc, china clay, barytes, iron blues, leadblues, organic reds, organic maroons and the like.

The coating compositions according to the present invention generally comprise:
- from 50 to 98 weight % of carboxylic acid group containing amorphous polyester
- from 1 to 10 weight % of β-hydroxyalkylamide cross-linking agent
- from 0 to 10 weight % of one or more UV light absorbers, stabilisers, flow control agents, degassing agents
- from 0 to 49 weight % pigments and/or dyes.

The components of the composition according to the invention may be mixed by dry blending in a mixer or blender (e.g. drum mixer). The premix is then homogenised at temperatures ranging from 70 to 150°C in a single screw extruder such as the BUSS-Ko-Kneter or a double screw extruder such as the PRISM or APV. The extrudate, when cooled down, is grounded to a powder with a particle size ranging from 10 to 150 µm. The powdered composition may be deposited on the substrate by use of a powder gun such as an electrostatic CORONA gun or TRIBO gun. On the other hand, well-known methods of powder deposition such as the fluidised bed technique can be used. After deposition the powder is generally heated to a temperature between 140 and 250°C, causing the particles to flow and fuse together to form a smooth, uniform, continuous, uncratered coating on the substrate surface.

The following examples are submitted for a better understanding of the invention without being restricted thereto.

### Example 1

A mixture of 338.8 parts of neopentyl glycol, 84.7 parts of 1,6-hexanediol and 5.1 parts of trimethylolpropane is placed in a reactor. At a temperature of 130°C, 120.5 parts of terephthalic acid, 481.9 parts of isophthalic acid and 2.5 parts of n-butyltintrioctoate are added. The reaction is continued at 220°C under atmospheric pressure until about 95% of the theoretical amount of water is distilled and a transparent hydroxyl functionalised prepolymer with following characteristics is obtained:

| | |
|---|---|
| AN | 9 mg KOH/g |
| OHN | 58 mg KOH/g |

To the first step prepolymer standing at 200°C, 110.9 parts of isophthalic acid are added. Thereupon, the mixture is gradually heated to 230°C. After a 2 hours period at 230°C and when the reaction mixture is transparent, 0.9 parts of tributylphosphite are added and a vacuum of 50 mm Hg is gradually applied. After 3 hours at 230°C and 50 mm Hg, following characteristics are obtained:

| | |
|---|---|
| AN | 33 mg KOH/g |
| OHN | 4 mg KOH/g |
| ICI200°C (cone/plate) | 2500 mPa.s |
| Tg (DSC, 20°/min) | 57°C |

### Examples 2 to 5

Adopting the procedure of Example 1, but in one step alone, as series of examples, accordingly the present invention, (Ex. 2 - Ex. 5) were prepared. The monomer composition as well as the resin characteristics are given in table 1.

**Table 1**

| | Ex.2 | Ex.3 | Ex.4 | Ex. 5 |
|---|---|---|---|---|
| iPA | 766.7 | 712.4 | 745.1 | 704.3 |
| NPG | 193.3 | 343.2 | 262.2 | 307.0 |
| EG | 112.1 | | 66.2 | |
| HD | 81.2 | 85.8 | 75.0 | 131.6 |
| AN | 30 | 31 | 30 | 21 |
| ICI viscosity mPa.s | 1500 | 1700 | 2200 | 4500 |
| Tg,°C | 56 | 57 | 57 | 57 |

In this table the different compounds used for the preparation of the polyesters according to the present invention and the characterisation of the polyesters are designated by the following abbreviations:

| | |
|---|---|
| NPG | neopentyl glycol |
| EG | ethylene glycol |
| HD | 1,6-hexanediol |
| iPA | isophthalic acid |
| AN | acid number, mg KOH/g |
| OHN | hydroxyl number, mg KOH/g |
| ICI viscosity | cone/plate viscosity, measured at 200°C |
| Tg | glass transition temperature (DSC, 20°C/minute) |

### Example 6:

The polyesters as illustrated above, are then formulated to a powder accordingly to one of the formulations as mentioned below.

| Formulation A | | Formulation B | |
|---|---|---|---|
| White paint formulation | | Brown paint formulation | |
| Binder | 69.06 | Binder | 78.33 |
| Kronos 2310 | 29.60 | Bayferrox 130 | 4.44 |
| Resiflow PV5 | 0.99 | Bayferrox 3950 | 13.80 |
| Benzoin | 0.35 | Carbon Black FW2 | 1.09 |
| | | Resiflow PV5 | 0.99 |
| | | Benzoin | 0.35 |

The powders are prepared first by dry blending of the different components and then by homogenisation in the melt using a PRISM 16 mm L/D 15/1 twin screw extruder at an extrusion temperature of 85°C. The homogenised mix is then cooled and grinded in an Alpine. Subsequently the powder is sieved to obtain a particle size between 10 and 110 µm. The powder thus obtained is deposited on cold rolled steel with a thickness of 0.8 mm, by electrostatic deposition using the GEMA - Volstatic PCG 1 spraygun. At a film thickness of about 80 µm the panels are transferred to an air-ventilated oven, where curing proceeds for 15 minutes at a temperature of 200°C. The paint characteristics for the finished coatings obtained from the polyesters of the present invention (Ex. 1 to Ex.5) as well as from two commercial polyesters, Crylcoat 7617 and Crylcoat 7642, standard -Primid XL552 (95/5)- resins for respectively outdoor and superdurable applications, and illustrated by way of comparison, are given in table 2. Crylcoat 7617 is mainly composed of terephthalic acid and neopentyl glycol and has an AN of 30 mg KOH/g. Crylcoat 7642 is purely composed of isophthalic acid and of neopentyl glycol and has an AN of 35 mg KOH/g.

In this table:

| | | |
|---|---|---|
| Column 1 : | indicates the identification number of the formulation | |
| Column 2 : | indicates the type of formulation | |
| | | A = white (RAL9010) |
| | | B = medium brown (RAL8014) |
| Column 3 : | indicates the type and quantity of the polyester resin used in the formulation | |
| Column 4 : | indicates the type and quantity of β-hydroxyalkylamide cross-linker : | |
| | | XL552 = Primid XL552 (EMS) = N.N,N',N'-tetrakis-(2-hydroxyethyl)-adipamide |
| Column 5 : | indicates the 60° gloss, measured according to ASTM D523 | |
| Column 6 : | indicates the direct impact strength according to ASTM D2794. The highest impact which does not crack the coating is recorded in kg.cm. | |
| Column 7 : | indicates the reverse impact strength according to ASTM D2794. The highest impact which does not crack the coating is recorded in kg.cm. | |
| Column 8 : | indicates the Erichsen slow embossing according to ISO 1520. The highest penetration which does not crack the coating is recorded in mm. | |
| Column 9 : | indicates the aspect of the coating | |
| | g = very smooth mirror-like finish | |
| | m = orange peel | |

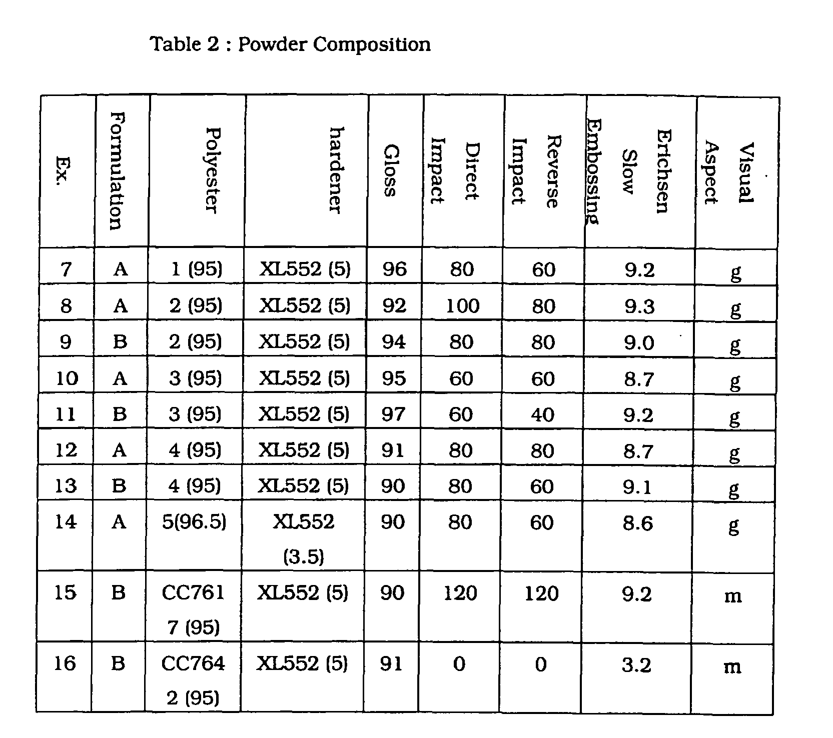

As clearly appears from table 2, the powders according to the present invention (Ex. 7 to 14) thus prove to satisfy a combination of properties, such as flexibility and gloss. They all give coatings with a very good surface aspect, comparable to nowadays standard outdoor powders (Comparative example 15). As clearly appears from comparative example 16 no flexibility is obtained for a coating based on a β-hydroxyalkylamide hardener and a carboxyl group containing isophthalic-rich polyester where no linear chain aliphatic diol is used

Moreover it has been proven that polyester resins answering a composition as claimed in this invention, allow for paint coating without any defects or pinholing at a thickness of up to 200 µm. Thus, powder formulations answering the examples 7 to 14, allow for paint films of 200µm with outstanding flow and without showing any pinhole or other defect.

Besides an outstanding flexibility, flow and degassing properties, the powder coating compositions of the present invention prove to satisfy an excellent outdoor resistance comparable to or better than the currently used nowadays commercial polyester based powders.

In table 3, the relative 60° gloss values, recorded every 400 hours, according to ASTM D523, is reported for the coating obtained from example 9, 11 and 13, according to the invention, and submitted to the Q-UV accelerated weathering test. In the same table are given, by way of comparison, the weathering results for the coatings obtained from example 15 and 16, derived from commercial resins.

In this table only gloss reductions until 50% of the maximum value are mentioned. Weathering measurements are conducted in a very severe environment, i.e. the Q-UV accelerated weathering tester (Q-Panel Co) according to ASTM G53-88 (standard practice for operating light and water exposure apparatus - fluorescent UV/condensation type - for exposure of non metallic materials).

For this table, coated panels have been subjected to the intermittent effects of condensation (4 hours at 50°C) as well as the damaging effects of sunlight simulated by fluorescent UV-A lamps (340 nm. I = 0.77 W/m²/nm) (8 hours at 60°C). For this type of lamps a good correlation with natural sunlight is observed, contrary to the UV-B 313 nm lamps, where unwanted or unnatural chemical reactions are induced, as described in "Analysis of Test Methods for UV Durability Predictions of Polymer Coatings" from Courtaulds Coatings Ltd. as presented during the XXth International Conference in Organic Coatings/Science and Technology (Athens, Greece, 07/94) or as described in the Technical Bulletin L8006 from Q-Panel or by N. Patel, JOCCA 3, 104, (1991).

The panels used in the Q-UV are chromated aluminium ones.

**Table 3**

| | UV-A (340 nm, I = 0.77 W/m²/nm | | | | |
|---|---|---|---|---|---|
| Hours | Ex. 9 | Ex. 11 | Ex. 13 | Ex. 15 | Ex. 16 |
| 0 | 100 | 100 | 100 | 100 | 100 |
| 400 | 99 | 100 | 100 | 99 | 99 |
| 800 | 99 | 100 | 100 | 88 | 99 |
| 1200 | 98 | 99 | 100 | 74 | 97 |
| 1600 | 97 | 98 | 100 | 69 | 97 |
| 2000 | 95 | 97 | 99 | 63 | 95 |
| 2400 | 91 | 95 | 97 | 26 | 92 |
| 2800 | 82 | 92 | 96 | | 86 |
| 3200 | 81 | 88 | 94 | | 80 |
| 3600 | 73 | 82 | 90 | | 80 |
| 4000 | 66 | 83 | 88 | | 73 |
| 4400 | 61 | 86 | 87 | | 76 |
| 4800 | 50 | 86 | 85 | | 69 |
| 5200 | 48 | 86 | 84 | | 75 |
| 5600 | 47 | 86 | 88 | | 66 |
| 6000 | 46 | 85 | 88 | | 60 |
| 6400 | 43 | 89 | 88 | | 54 |
| 6800 | 41 | 91 | 88 | | 57 |
| 7200 | 33 | 91 | 89 | | 71 |
| 7600 | | 91 | 91 | | 66 |
| 8000 | | 89 | 95 | | 50 |
| 8400 | | 87 | 95 | | 50 |
| 8800 | | 77 | 94 | | 47 |
| 9200 | | 50 | 87 | | 45 |
| 9600 | | 39 | 80 | | 43 |
| 10000 | | 27 | 66 | | 41 |
| 10400 | | 24 | 50 | | 39 |
| 10800 | | | 47 | | 35 |
| 11200 | | | 45 | | 33 |
| 11600 | | | 43 | | 30 |
| 12000 | | | 41 | | |

As clearly appears from tables 2 and 3, powder compositions according to the present invention containing as a binder a combination of the carboxyl functional polyester according to the present invention along with a β-hydroxyalkylamide cross-linking agent, prove upon application and curing an unique combination of properties such as a good flexibility, outstanding flow and gloss and a remarkable weatherability.

## Claims

1. Powdered thermosetting compositions, **characterised in that** they comprise:
(a) a carboxylic acid group containing amorphous polyester having an acid number of from 12 to 34 mg KOH/g and prepared from a polyacid constituent comprising from 81 to 100% mole of isophthalic acid and from 0 to 19% mole of another aliphatic, cycloaliphatic or aromatic polyacid, and of a polyol constituent comprising from 15 to 65% mole of one or more linear chain aliphatic C4 - C16 diol, from 35 to 85% mole of neopentyl glycol, from 0 to 50% mole of another linear chain aliphatic and/or cycloaliphatic diol and from 0 to 5% mole of a polyol with 3 or more hydroxyl groups;
b) a cross-linking agent having at least two β-hydroxyalkylamide groups,
with the proviso that the composition contains less than 5% by weight of semi-crystalline polyesters.

2. The thermosetting powder according to claim 1 **characterized in that** the composition contains no semi-crystalline polyester.

3. The thermosetting powder according to any preceding claim, in which the carboxylic acid group containing amorphous polyester is **characterised by**
- a number averaged molecular weight ranging from 2500 to 8600, preferably from 3300 to 7500 as measured by gel permeation chromatography (GPC)
- a glass transition temperature Tg from 40 to 80°C and preferably from 56 to 70°C as measured by differential scanning calorimetry (DSC) according to ASTM D3418 with a heating gradient of 20°C per minute
- an ICI (cone/plate) viscosity accordingly to ASTM D4287, measured at 200°C ranging from 5 to 15000 mPa.s

4. The thermosetting powder according to any preceding claim, **characterised in that** the 0 to 19% mole of the aliphatic, cycloaliphatic or aromatic polyacids, other than isophthalic acid is selected from fumaric acid, maleic acid, phthalic acid, terephthalic acid, 1,4-cyclohexanedicarboxylie acid, 1,3-cyclohexanediearboxylic acid, 1,2 - cyclohexanedicarboxylic acid, succinic acid, adipic acid, glutaric acid, pimelic acid, suberic acid, azelaic acid, sebacic acid, 1,12-dodecanedioic acid, trimellitic acid, pyromellitic acid, and the corresponding anhydrides.

5. The thermosetting powder according to any preceding claim, **characterised in that** the 15 to 65% mole of linear chain aliphatic C4-C16 diols are selected from 1,4-butanediol, 1,5-pentanediol, 1,6-hexanedlol, 1,7-heptanedio 1,8-octanediol, 1,9-nonanediol, 1,10-decanediol, 1,12-dodecanediol, 1,14-tetradecandiol, 1,16-hexadecandiol, used in a mixture or alone, **in that** the 0 to 50% mole of the other linear chain aliphatic and/or cycloaliphatic diol is selected from ethylene glycol, propylene glycol, 1,4-cyclohexanediol, 1,4-cyclohexanedimethanol, hydrogenated Bisphenol A, and **in that** the 0 to 5% mole of the polyol having 3 or more hydroxy groups is selected from trimethylolpropane, ditrimethylolpropane, pentaerythrytol, used in a mixture or alone,

6. The thermosetting powder according to any preceding claim **characterised in that** it is composed of a polyacid constituent comprising from 81 to 100% mole of isophthalic acid and from 0 to 19% mole of terephthalic acid and or 1,4-cyclohexanedicarboxylic acid and of a polyol constituent comprising from 15 to 65% mole of linear chain aliphatic C4-C16 diol, preferably 1,6-hexanediol, from 35 to 85% mole of neopentyl glycol, from 0 to 50% mole of ethylene glycol and from 0 to 5% mole of trimethylolpropane.

7. The thermosetting powders according to any preceding claim, comprising:
- from 50 to 98 weight % of the carboxylic acid group containing amorphous polyester
- from 1 to 10 weight % of β-hydroxyalkylamide cross-linking agent
- from 0 to 10 weight % of one or more UV light absorber, stabilisers, flow control agents, degassing agents
- from 0 to 49 weight % pigments and/or dyes.

8. Process for coating an article, **characterised in that** powdered thermosetting compositions according to any of claims 1 to 7 are applied by an electrostatic or friction charging gun, or in a fluidised bed, and **in that** the coating thus obtained is heated at a temperature of from 140 to 250°C.

9. Substrate entirely or partially coated by the process of claim 8.

## Patentansprüche

1. Pulverförmige, hitzehärtbare Zusammensetzungen, **dadurch gekennzeichnet, dass** sie:
(a) einen Carbonsäuregruppen enthaltenden, amorphen Polyester, der eine Säurezahl von 12 bis 34 mg KOH/g aufweist und aus einem mehrbasigen Bestandteil, umfassend 81 bis 100 mol-% Isophthalsäure und 0 bis 19 mol-% einer anderen aliphatischen, cycloaliphatischen oder aromatischen mehrbasigen Säure, und einem Polyolbestandteil, umfassend 15 bis 65 mol-% von einem oder mehreren geradkettigen, aliphatischen C4-C16-Diol(en), 35 bis 85 mol% Neopentylglycol, 0 bis 50 mol-% eines anderen geradkettigen, aliphatischen und/oder cycloaliphatischen Diols und 0 bis 5 mol-% eines Polyols mit 3 oder mehr Hydroxylgruppen, hergestellt ist;
b) ein Vernetzungsmittel mit mindestens zwei β-Hydroxyalkylamidgruppen umfassen,
mit der Maßgabe, dass die Zusammensetzung weniger als 5 Gew.-% halbkristalline Polyester enthält.

2. Hitzehärtbares Pulver nach Anspruch 1, **dadurch gekennzeichnet, dass** die Zusammensetzung keinen halbkristallinen Polyester enthält.

3. Hitzehärtbares Pulver nach einem der vorhergehenden Ansprüche, wobei der Carbonsäuregruppen enthaltende amorphe Polyester **gekennzeichnet ist durch**
- ein zahlenmittleres Molekulargewicht im Bereich von 2500 bis 8600, bevorzugt 3300 bis 7500, gemessen **durch** Gelpermeationschromatographie (GPC);
- eine Glasübergangstemperatur Tg von 40 bis 80 °C und bevorzugt 56 bis 70 °C, gemessen **durch** Differential-Scanning-Kalorimetrie (DSC) nach ASTM D3418 mit einem Wärmegradienten von 20 °C pro Minute;
- eine ICI- (Kegel/Platte-) -Viskosität nach ASTM D4287, gemessen bei 200 °C, im Bereich von 5 bis 15.000 mPa · s.

4. Hitzehärtbares Pulver nach einem der vorhergehenden Ansprüche, **dadurch gekennzeichnet, dass** die 0 bis 19 mol-% der aliphatischen, cycloaliphatischen oder aromatischen mehrbasigen Säuren, die nicht Isophthalsäure sind, ausgewählt sind aus Fumarsäure, Maleinsäure, Phthalsäure, Terephthalsäure, 1,4-Cyclohexandicarbonsäure, 1,3-Cyclohexandicarbonsäure, 1,2-Cyclohexandicarbonsäure, Bernsteinsäure, Adipinsäure, Crlutarsäure, Pimelinsäure, Korksäure, Azelainsäure, Sebacinsäure, 1,12-Dodecandisäure, Trimellithsäure, Pyromellithsäure und den entsprechenden Anhydriden.

5. Hitzehärtbares Pulver nach einem der Vorhergehenden Ansprüche, **dadurch gekennzeichnet, dass** die 15 bis 65 mol-% der geradkettigen, aliphatischen C4-C16-Diole ausgewählt sind aus 1,4-Butandiol, 1,5-Pentandiol, 1,6-Hexandiol, 1,7-Heptandiol, 1,8-Octandiol, 1,9-Nonandiol, 1,10-Decandiol, 1,12-Dodecandiol, 1,14-Tetradecandiol, 1,16-Hexadecandiol, verwendet in einem Gemisch oder allein, dass die 0 bis 50 mol% des anderen geradkettigen, aliphatischen und/oder cycloaliphatischen Diols ausgewählt sind aus Ethylenglycol, Propylenglycol, 1,4-Cyclohexandiol, 1,4-Cyclohexandimethanol, hydriertem Bisphenol A, und dass die 0 bis 5 mol-% des Polyols mit 3 oder mehr Hydroxylgruppen ausgewählt sind aus Trimethylolpropan, Ditrimethylolpropan, Pentaerythritol, verwendet in einem Gemisch oder allein.

6. Hitzehärtbares Pulver nach einem der vorhergehenden Ansprüche, **dadurch gekennzeichnet, dass** es aus einem mehrbasigen Bestandteil, umfassend 81 bis 100 mol% Isophthalsäure und 0 bis 19 mol-% Terephthalsäure und/oder 1,4-Cyclohexandicarbonsäure, und aus einem Polyolbestandteil, umfassend 15 bis 65 mol-% eines geradkettigen, aliphatischen C4-C16-Diols, bevorzugt 1,6-Hexandiol, 35 bis 85 mol-% Neopentylglycol, 0 bis 50 mol% Ethylenglycol und 0 bis 5 mol-% Trimethylolpropan, besteht.

7. Hitzehärtbare Pulver nach einem der vorhergehenden Ansprüche, umfassend:
- 50 bis 98 Gew.-% des Carbonsäuregruppen enthaltenden amorphen Polyesters;
- 1 bis 10 Gew.% des β-Hydroxyalkylamid-Vernetzungsmittels;
- 0 bis 10 Gew.-% von einem oder mehreren UV-Absorbem, Stabilisatoren, Flusskontrollmitteln, Entgasungsmitteln;
- 0 bis 49 Gew.-% Pigmente und/oder Farbstoffe.

8. Verfahren zur Beschichtung eines Gegenstandes, **dadurch gekennzeichnet, dass** die pulverförmigen hitzehärtbaren Zusammensetzungen nach einem der Ansprüche 1 bis 7 mit einer elektrostatisch oder durch Reibung aufgeladenen Spritzpistole oder in einem Fließbett aufgetragen werden und dass die so erhaltene Beschichtung bei einer Temperatur von 140 bis 250 °C erwärmt wird.

9. Substrat, vollstandig oder teilweise beschichtet mittels des Verfahrens von Anspruch 8.

## Revendications

1. compositions thermodurcissables réduites en poudre **caractérisées en ce qu'**elles comprennent :
(a) un polyester amorphe contenant un groupe acide carboxylique ayant un indice d'acide allant de 12 à 34 mg de KOH/g et préparé à partir d'un constituant polyacide comprenant de 81 à 100 % en mole d'acide isophthalique et de 0 à 19 % en mole d'un autre polyacide aliphatique, cycloaliphatique ou aromatique et d'un constituant polyol comprenant de 15 à 65 % en mole d'un ou de plusieurs diol aliphatique linéaire ayant de 4 à 16 atomes de carbone, de 35 à 85 % en mole de néopentyl glycol, de 0 à 50 % en mole d'un autre diol linéaire aliphatique et/ou cycloaliphatique et de 0 à 5 % en mole d'un polyol ayant 3 ou plus de 3 groupes hydroxyles ;
(b) un agent de réticulation ayant au moins deux groupes β-hydroxyalkylamides,
sous réserve que la composition contienne moins de 5 % en poids de polyesters semicristallins.

2. Poudre thermodurcissable suivant la revendication 1, **caractérisée en ce que** la composition ne contient pas de polyester semicristallin.

3. Poudre thermodurcissable suivant l'une quelconque des revendications précédentes, dans laquelle le polyester amorphe contenant le groupe acide carboxylique est **caractérisée par**
- une masse moléculaire moyenne en nombre de 2500 à 8600, de préférence de 3300 à 7500, telle que mesurée par chromatographie par perméation de gel (GPC)
- une température de transition vitreuse allant de 40 à 80°C et de préférence de 56 à 70°C tel que mesuré par analyse calorimétrique par balayage différentiel (DSC) suivant l'ASTM D3418 ayant un gradient de chauffage de 20°C à la minute
- une viscosité ICI (cône/plan) suivant l'ASTM A4287 mesurée à 200°C allant de 5 à 15000 mPa.s.

4. Poudre thermodurcissable suivant l'une quelconque des revendications précédentes, **caractérisée en ce que** les 0 à 19 % en mole des polyacides aliphatiques, cycloaliphatiques ou aromatiques autres que l'acide isophthalique sont choisis parmi l'acide fumarique, l'acide maléique, l'acide phtalique, l'acide téréphtalique, l'acide 1,4-cyclohexanedicarboxylique, l'acide 1,3-cyclohexanedicaxboxylique, l'acide 1,2-cyclohexanedicarboxylique, l'acide succinique, l'acide adipique, l'acide glutarique, l'acide pimélique, l'acide subérique, l'acide azélaique, l'acide sébacique, l'acide 1,12-dodécanedioïque, l'acide trimellitique, l'acide pyroméllitique, et les anhydrides correspondants.

5. Poudre thermodurcissable suivant l'une quelconque des revendications précédentes, **caractérisée en ce que** les 15 à 65 % en mole de diols aliphatiques linéaires ayant de 4 à 16 atomes de carbone sont choisis parmi le 1,4-butarsediol, le 1,5-pentanediol, le 1,6-hexanediol, le 1,7-heptanediol, le 1,8-octanediol, le 1,9-nonanediol, le 1,10-decanediol, le 1,12-dodecanediol, le 1,14-têtradecanediol, le 1,16-hexadacanediol, utilisés seuls ou en mélange, **en ce que** les 0 à 50 % en mole de l'autre diol linéaire aliphatique et/ou cycloaliphatique sont choisis parmi l'éthylène glycol, le propylène glycol, le 1,4-cyclohexanediol, le 1,4-cyclohexanediméthanol, le Bisphénol-A hydrogéné, et **en ce que** les 0 à 5 % en mole du polyol ayant 3 ou plus de 3 groupes hydroxyles sont choisis parmi le triméthylolpropane, le ditriméthylolpropane, le pentaerythrytol, utilisé seul ou en mélange.

6. Poudre thermodurcissable suivant l'une quelconque des revendications précédentes, **caractérisée en ce qu'**elle est composée d'un constituant polyacide comprenant de 81 à 100 % en mole d'acide isophthalique et de 0 à 19 % en mole d'acide téréphtalique et/ou d'acide 1,4-cyclohexariedicarboxylique et d'un constituant polyol comprenant de 15 à 65 % en mole de diol aliphatique linéaire ayant de 4 à 16 atomes de carbone, de préférence le 1,6-hexanediol, de 35 à 85 % en mole de néopentyl glycol, de 0 à 50 % en mole d'éthylène glycol et de 0 à 5 % en mole de triméthylolpropane.

7. Poudre thermodurcissable suivant l'une quelconque des revendications précédentes, comprenant :
- de 50 à 98 % en poids du polyester amorphe contenant un groupe acide carboxylique
- de 1 à 10 % en poids du 3-hydroxyalkylamide servant d'agent de réticulation
- de 0 à 10 % en poids d'un ou plusieurs absorbeurs de lumière UV, stabilisants, agents de contrôle de l'écoulement, agents de dégazage
- de 0 à 49 % en poids de pigments et/ou de coloriant.

8. Procédé pour revêtir un article, **caractérisé en ce que** l'on applique des compositions thermodurcissables réduites en poudre suivant l'une quelconque des revendications 1 à 7, par un pistolet électrostatique ou à friction, ou dans un lit fluidisé, et **en ce qu'**on porte le revêtement ainsi obtenu à une température de 140 à 250°C.

9. Substrat revêtu entièrement ou en partie par le procédé de la revendication 8.
